# EUROPEAN PATENT SPECIFICATION

(11) **EP 2 885 622 B1**
(45) Date of publication and mention of the grant of the patent: **04.10.2017**
(21) Application number: 13779375.8
(22) Date of filing: 14.08.2013
(51) Int. Cl.: G01N 13/00

(54) **DEVICE AND METHOD FOR DETERMINING THE DISSOLUTION KINETICS OF COLLOIDAL NANOPARTICLES**
VORRICHTUNG UND VERFAHREN ZUR BESTIMMUNG DER AUFLÖSUNGSKINETIK VON KOLLOIDNANOTEILCHEN
DISPOSITIF ET PROCÉDÉ POUR LA DÉTERMINATION DE LA CINÉTIQUE DE DISSOLUTION DE NANOPARTICULES COLLOÏDALES

(30) Priority: 14.08.2012 IT TO20120730
(43) Date of publication of application: 24.06.2015
(73) Proprietor: Fondazione Istituto Italiano Di Tecnologia, 16163 Genova (IT)
(72) Inventor: POMPA, Pier Paolo, 73100 Lecce (IT); SABELLA, Stefania, 73100 Lecce (IT); CINGOLANI, Roberto, I-16014 Ceranesi (IT)
(74) Representative: Bosia, Alessandra
(86) International application number: PCT/IB2013/056645
(87) International publication number: WO 2014/027323

(56) References cited:
- EP-A2- 0 246 760
- WO-A1-2011/067587
- US-A- 6 004 822
- US-A1- 2007 160 497
- US-A1- 2012 000 275

## Description

### TECHNICAL FIELD

The present invention concerns a device and a method for determining the dissolution kinetics of colloidal nanoparticles into respective derivation ions in a solution, and a relative method for evaluating in vitro the toxicity of said colloidal nanoparticles.

### BACKGROUND ART

Nanoparticles (below also indicated as NP) are particles formed from atomic or molecular aggregates with a diameter in the order of nanometres.

One particular class of NP, that of the colloidal nanoparticles consisting of metals and metal oxides is increasingly frequently used in the biomedical field due to its particularly advantageous chemical-physical properties. These nanoparticles can be used as nanosensors of tumour markers for a more rapid and effective diagnosis of tumours and as contrast agents for in vivo imaging diagnostics. There are also various examples of colloidal nanoparticles functionalized with different ligands or loaded with different types of drugs which are used as pharmaceutical carriers for the targeted and controlled release of antitumour drugs.

More specifically, Quantum Dots (QD), iron oxide nanoparticles (IONP), gold nanoparticles (AuNP) and silver nanoparticles (AgNP), the characteristics and biomedical uses of which are described below, are of considerable interest for biomedical uses.

Quantum Dots (QD) are colloidal nanocrystals consisting of semiconductor metals. They have optical and electrical properties which can be controlled by the nanometric dimension. QDs are fluorescent nanoparticles, the fluorescence emission spectrum of which has a greater intensity compared to that of conventional fluorescent fluorophores. They have a high photostability, a very selective emission spectrum and a very wide absorption band. For biomedical applications, the above-mentioned spectrum characteristics make the fluorophore QDs excellent for long-term in vivo imaging. The optical properties of the QDs are determined by the particular chemical composition of the nanoparticles, as they consist of a core of semiconductor materials belonging to groups 12 and 16 of the periodic table (CdSe, CdTe, and ZnS) or to groups 13 and 15 (InP and GaN). The synthesis processes for the QDs can be mediated both by aqueous phases and by organic phases and there are various synthetic options that allow many dimensions and forms of QD (core-shell, QDs soluble in water coated by different molecules, etc.) to be obtained. QDs consist of heavy metals and a considerable cytotoxicity has been demonstrated for them in vitro and in vivo. It is known that the release of cadmium ions leads to phenomena of toxicity which are closely correlated to the toxicity of the ion.

Iron oxide nanoparticles (IONP) are part of the class of the metal oxide NPs. In particular, the IONPs are iron oxide nanoparticles with ferromagnetic properties. The IONPs can be obtained by different synthesis processes and in different dimensions, however for biomedical applications, nanoparticles with smaller dimensions are used, given the superparamagnetic properties of the latter. In fact, only small size nanoparticles have a considerable magnetism exclusively in the presence of a magnetic field. In the absence thereof, no phenomena of residual magnetism are associated given the presence of only one single Weiss domain. IONPs are widely used as fluorophores and new contrast agents for MRI, as new anticancer carriers in treatments based on hyperthermia and as new drugs for the controlled intelligent release of drugs and gene therapy. Also for the IONPs, the synthesis processes allow the production of numerous nanoparticle variations having a considerable variety of ligands on the surface. Some formulations coated in dextrans are approved by the FDA as contrast agents for MRI. Typically, the IONPs release ferrous ions which are natural intracellular ligands. They are metabolised by a specialist intracellular protein, ferritin, which controls the intracellular balance. Historically these NPs are not considered cytotoxic, however an excess in the release of said ion can lead to very toxic effects in the cell.

Gold nanoparticles (AuNP) represent a very wide class of nanoparticles produced in different dimensions ranging from nanoclusters (a few gold atoms and dimensions smaller than 1-3 nm) to dimensions in the range from 100 to 200 nm. Furthermore they can have different shapes (nanospheres, nanocubes, nanotriangles, nanocylinders, etc.) and different ligands on the surface (molecules of polyethylglycol, DNA, proteins, peptides, drugs, photosensitive molecules, etc.). The biomedical applications for gold nanoparticles are numerous and range from sensor elements for diagnostics (selective detection of target tumours such as DNA, microRNA, proteins, cells, etc.), to drugs for cancer therapy, anticancer treatments based on hyperthermia, through to industrial applications such as catalysts, sensors etc. AuNPs can absorb or scatter the incident light with a specific wavelength producing a phenomenon defined as localised surface plasmon resonance, or LSPR. The LSPR peak can be controlled up to wavelengths in the near-IR region (800-1100 nm). Since this is a transparent region for the organic tissues, this characteristic is of fundamental importance in view of the use of these NPs as new contrast agents. Typically gold in bulk (on a macroscale) is considered biocompatible and for a long time it was believed that NPs were not toxic by simple comparison with gold in bulk. However, in the last decade, wide-ranging scientific literature has shown that gold NPs are cytotoxic, genotoxic and mutagenic both in vitro and in vivo.

Silver nanoparticles (AgNP) have unique optical, electrical and thermal properties and, for this reason, are currently incorporated in numerous commercial products which range from photovoltaic to chemical and biological sensors. Other application examples include conductive inks, glues and fillers, in which silver nanoparticles are widely used due to their high electric conductivity and their stability. There is furthermore great interest in using silver nanoparticles as a functional component of sensors. These nanoparticles are extraordinarily efficient in absorbing and diffusing light and, unlike the other organically-based dyes and pigments, have a colour which varies and depends strictly on their size and shape. This strong interaction between silver nanoparticles and incident light is due mainly to the conduction electrons present on the metal surface, which undergo a phenomenon of collective oscillation if excited by a light source at a specific wavelength. Better known as surface plasmon resonance (SPR), this oscillation produces an unusual and strong phenomenon of diffusion and absorption. Another unique optical property is that the SPR of silver spherical nanoparticles can be modulated from 400 nm (violet) to 530 nm (green) by simply changing their size. More marked shifts in the peak of surface plasmon resonance (SPR) (up to the region of the near IR in the spectrum) can be obtained by producing silver nanoparticles with a rod or plate-like shape. In addition to these specific optical characteristics, AgNPs have been recently used in different types of coatings, fabrics, keypads, medicinal apparatus and biomedical devices given their marked antibacterial capability. However, despite the abundant presence of AgNPs on the world market, many of the relations between antibacterial properties and ctytotoxic effects are not known. This point is very worrying given the degree of marketing of products containing silver nanoparticles.

For use in the biomedical field, therefore, nanoparticles must be characterised in a complete and detailed manner, in both chemical-physical terms and toxicological terms.

This characterisation must take place both in the phase in which the nanoparticles are produced ("as supplied"), and in the phase in which they are formulated, i.e. in the biological media and in the dispersion solutions used in the in vivo biomedical applications ("as dispersed"). The chemical-physical properties of nanoparticles in biological media and in the dispersion solutions used for in vivo biomedical applications can be very different from those "as supplied". The properties at the interface and the effects induced by phenomena of aspecific adsorption/absorption of biomacromolecules such as proteins, sugars, peptides, etc. contained in the biological liquids (plasma, serum, gastric juice, saliva, etc.) must be taken into account. These properties guide the interaction of the nanoparticles with the cells (for example, the efficiency of cellular internalisation which varies with the dimensions of the nanoparticles), the interaction of the nanoparticles with the cellular compartments, the intracellular stability of the nanoparticles (for example, a specific coating can preserve or accelerate the degradation of the nanoparticles), the greater or lesser biopersistence in the plasma or in other biological liquids (for example, nanoparticles conjugated with molecules of polyethylglycols can be partially not recognised by the immune system and therefore have a longer half-life in the blood).

Both the chemical-physical characterisation and evaluation of the toxicity of the nanoparticles in a biological environment are difficult to determine for the following reasons.

Firstly, the particular chemical-physical properties, such as size, shape, load, area and surface topography are difficult to measure in biological liquids and/or in vivo given their sudden variability.

Furthermore, the bioassays are typically conducted by following the normal methods used for small soluble molecules and, therefore, in the majority of cases, they are inadequate and/or not standardised for measurement of the cytotoxic effect of the nanoparticles.

In addition, the optical properties of the nanoparticles interfere at times with the cytotoxicity assays.

Lastly, different types of nanoparticles are provided with coatings which give them special properties, and the chemical-physical behaviour of which is not always predictable.

The toxicity of NPs vis-à-vis humans and the environment may be due more simply to the content of a toxic element or, in a more complex manner, to the transformation of an element which is normally not toxic into a toxic component following interaction of the nanoparticles with cells, tissues or biological liquids.

The need is therefore felt in the sector for devices and methods that allow stability tests to be performed (or dissolution or disgregation tests) on a wide range of colloidal nanoparticles in controlled environments, i.e. in temperature, solvent and pH conditions that mime the environments of the various compartments of the human body (for example, gastric or intestinal bolus) or cellular (for example, lysosomal, endosomal or cytoplasmatic environment, etc.), and which allow the measurement over time of the ion concentration in which the nanoparticle dissolves when it is incubated in these environments (release kinetics).

The need is also felt in the sector for devices and methods that allow evaluation of the toxicity of the colloidal nanoparticles in controlled environments in vitro and in vivo. The toxic effect of the nanoparticles is correlated with their dissolution kinetics as it depends on the release kinetics of the derivation ion (e.g. Au⁺ /³⁺, Cd²⁺, Ag⁺, Fe²⁺, etc.), which exercises the specific intracellular toxicity in the various target tissues and/or organelles (for example lysosomes) from which it diffuses.

To evaluate the stability (or dissolution or disaggregation) of traditional pharmaceutical products and formulations, devices are commonly used that allow determination of the release kinetics of the active ingredients contained in the pharmaceutical formulations, for example suppositories, pellets, tablets, capsules, microcapsule-based injectable solutions, liposomes etc.

These devices typically comprise three components:
- a vessel for the dissolving solution;
- a component for housing the pharmaceutical formulation to be dissolved, which allows dispersion of the dissolving molecule soluble in the dissolving solution, retaining the pharmaceutical formulation during the dissolution phase; and
- a device for sampling the dissolving solution in which the pharmaceutical formulation has been dissolved.

The vessel for the dissolving solution is typically a large glass with volume varying from 250 mL to 1 L. The vessels can be connected in series or in parallel and in general there are 6 or 12 of them for analyses on several channels.

The component for housing the pharmaceutical formulation to be dissolved consists alternatively of a basket, palette or flow cell, according to the type of pharmaceutical formulation to be analysed.

The sampling device can function in two modes: "open loop" or "closed loop".

In the "open loop" systems, a known volume of dissolving solution is withdrawn manually or by means of a pump at regular intervals and, subsequently, the released molecule contained in it is detected and quantified by means of appropriate instrumentation (for example UV-visible spectroscopes, HPLC, inductively coupled plasma atomic emission spectroscopy (ICP-AES), etc.).

The closed loop systems (with recirculation) are used above all in the case of dissolvers with flow cells and when very low concentrations of active ingredient with low solubility are analysed. The signal detected is accumulated over time, as the dissolving solution is enriched over time with the molecule released. In this case, the detection system is integrated in the machine. Currently only dissolvers with integrated UV-visible spectroscope exist.

For study of the dissolution of colloidal nanoparticles, the systems based on the use of baskets or palettes would not be suitable for separating the nanoparticle from the derivation ion.

The flow cell system, furthermore, would be difficult to adapt to this use, due to the following drawbacks.

Firstly, in these systems sampling is carried out only once the dissolution has been completed.

Furthermore, the use of a dialysis membrane in the flow cell systems involves a series of problems connected with the fact that the membrane can become saturated with aggregates of nanoparticles which can form during dissolution in acid agents, thus forming occlusions. In this situation, the diffusion speed of the ions reflects the diffusion speed through the membrane and not the release speed of the nanoparticle.

Dialysis is a very long process (it can even last days) and could alter or distort the release kinetics times. Furthermore the assay operating times would be excessively long.

In addition, the flow cell is blocked upstream and downstream by filters and beads in order to retain and avoid dispersion of the formulation being dissolved. In the case of nanoparticles, there is no guarantee that the filtering systems inserted (generally larger than 0.1 *µ*m) are sufficient to block the passage thereof.

A further problem is the fact that, given the low concentration in which the nanoparticles are generally produced, the closed loop model is preferable. However, at the moment there are no closed loop models equipped with detection systems of the ICP-AES type (inductively coupled plasma atomic emission spectroscopy) suitable for nanoparticles.

Lastly, the materials constituting the flow cell are often unsuitable for use with nanoparticles due to the aspecific adhesion of nanoparticles on the walls with consequent precipitation of the same.

US6004822 describes a device for determining the solubility of chemical compounds in a solvent. The device comprises a first and a second compartment, which are in fluid communication and separated by a membrane which prevents the passage of non-dissolved compound. A system of two pistons is provided to induce the passage of the solution of solvent and solute from one compartment to the other.

This device has numerous drawbacks which make it inapplicable to the colloidal nanoparticle stability tests.

Firstly determination of the solubility takes place in conditions of equilibrium, i.e. at saturation following the formation of a precipitate. It is obvious that these conditions cannot in any way mime the conditions that exist in biological solutions within organs or human cells. In a situation that reproduces a biological environment, the ratio between quantity of nanoparticles and solvent will be much lower than the saturation conditions. Even in the case of saturation conditions, the high consumption of nanoparticles for the tests would result in an excessive waste and a prohibitive cost of the assay.

Furthermore, the dissolution conditions in a biological environment cannot be even remotely reproduced in the device of US6004822, in fact dissolution of the solute in the solution is induced by forced passage through a filter in a laminar flow system (communication between the two vessels is by means of a capillary).

Furthermore, the type of membrane used in the device described in US6004822 would allow passage of the nanoparticles and would not allow separation of the derivation ions so as to determine the concentration thereof over time.

In-addition, the walls of the compartments of the device described in US6004822 are formed of a polymer polymethyl methacrylate, a material which would induce adsorption of the nanoparticles and precipitation of the same or the formation of metallic films on the wall.

WO2011/067587 describes a diffusion cell for measuring the transdermal absorption of substances such as pesticides, for example. A membrane that mimes human skin is inserted in the cell to simulate the flexibility and elasticity of the skin in vivo. A system of movement allows the membrane to move in a vertical direction via the application of localised or sinusoidal mechanical forces. This type of device cannot be applied to the colloidal nanoparticle stability tests because any movements of the membrane would damage the separation efficiency of the nanoparticles from the derived ions. Furthermore, in WO2011/067587 the membrane is a sample of animal or human tissue, which is not selectively permeable to the derivation ions of colloidal nanoparticles.

US2007/0160497 and US2012/000275 describe devices for dissolution tests for solid samples. The devices comprise a basket into which the solid sample is placed. These devices therefore cannot be used for liquid solutions containing nanoparticles. Furthermore the filtering membranes used have pore dimensions in the order of 1-3 micrometres, and they would therefore be unsuitable for use with nanoparticles.

Currently, therefore, no methods or devices exist which allow determination of the dissolution kinetics of colloidal nanoparticles in aqueous or biological liquids and evaluation in vitro of the toxicity thereof.

### DISCLOSURE OF INVENTION

One object of the present invention is therefore to provide a device for determining the dissolution kinetics of colloidal nanoparticles in respective derivation ions in a solution which at least partly solves one of the above drawbacks in a simple inexpensive manner.

The above-mentioned object is achieved by the present invention since it relates to a device as defined in Claim 1. The present invention also relates to a method for determining the dissolution kinetics of colloidal nanoparticles in respective derivation ions in a solution as defined in Claim 11.

### BRIEF DESCRIPTION OF THE DRAWINGS

For a better understanding of the present invention, a preferred embodiment is described below, purely by way of nonlimiting example and with reference to the attached drawings, in which:
- figure 1 is a schematic representation of a device for determining the dissolution kinetics of colloidal nanoparticles in respective derivation ions in a solution according to the present invention;
- figure 2 is a graph illustrating the curves of the release kinetics of corresponding ions from different nanoparticles in a solution of citrate buffer at pH 4.5 (a solution that mimes the pH of the lysosomal environment) and in aqueous solutions at neutral pH at 37°.

### BEST MODE FOR CARRYING OUT THE INVENTION

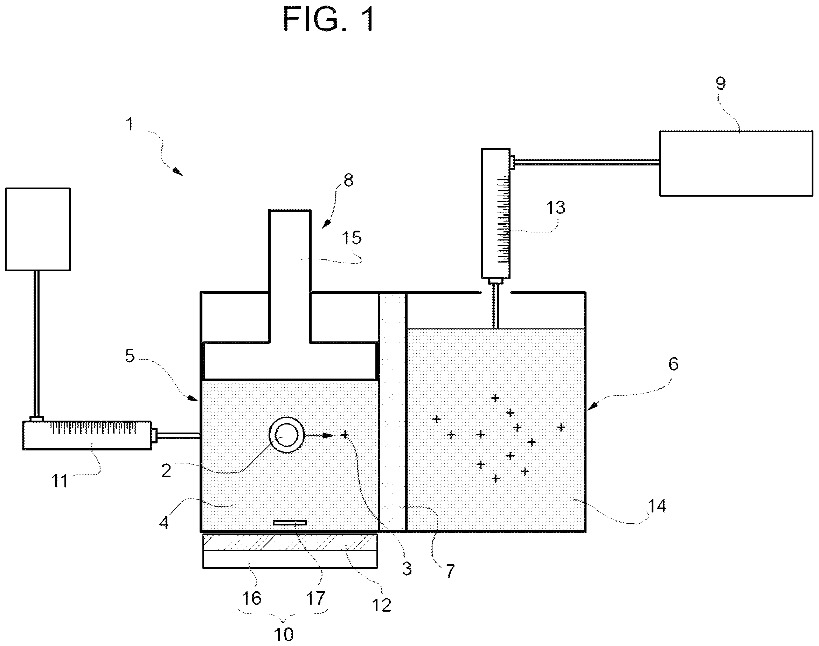

With reference to figure 1, the number 1 indicates a device for determining the dissolution kinetics of colloidal nanoparticles 2 in respective derivation ions 3 in a solution 4.

The device 1 essentially comprises:
- a dissolution compartment 5 feedable with the solution 4 and with the colloidal nanoparticles 2;
- an analysis compartment 6 separate from the dissolution compartment 5;
- a fixed filtering membrane 7 which separates the dissolution compartment 5 from the analysis compartment 6, is selectively permeable to the derivation ion 3 and is adapted to filter the solution 4;
- compressing means 8 actuatable to induce passage of the solution 4 from the dissolution compartment 5 to the analysis compartment 6 through the filtering membrane 7; and
- a determination device 9 for determining the quantity of the derivation ion 3.

Advantageously, the device 1 also comprises mixing means 10 which are associated to the dissolution compartment 5, are adapted to mix said solution 4, and are distinct from the compressing means 8, and the filtering membrane 7 has pores of size smaller than 10 nm.

In the case illustrated, the mixing means 10 can comprise an apparatus 16 able to generate a rotating magnetic field and an anchor 17 which is located on the bottom of the dissolution compartment 5 and rotates under the influence of the rotating magnetic field.

Preferably, the mixing means 10 and the compressing means 8 are actuatable independently of one another.

The compressing means 8 preferably comprise a piston 15 moving inside the dissolution compartment 5 to compress the solution 4 and induce the passage thereof from the dissolution compartment 5 through the filtering membrane 7 to the analysis compartment 6.

The device 1 preferably comprises an injector 11 adapted to feed the colloidal nanoparticles 2 to the dissolution compartment 5. The injector 11 can be graduated and feed with precision given quantities of nanoparticles 2.

The device 1 preferably comprises heating means 12 associated to the dissolution compartment 5. The heating means 12 have the function of maintaining the temperature at 37°C to reproduce the conditions of a biological liquid, or if necessary to facilitate dissolution of the colloidal nanoparticles 2 at other temperatures. The heating means 12 can for example comprise a heating plate positioned in contact with the lower base of the dissolution compartment. The heating means 12 can be integrated in the apparatus 16 able to generate a rotating magnetic field.

The determination device 9 for determining the quantity of derivation ion 3 can preferably comprise a chromatography apparatus, an electrophoresis apparatus, an ICP-AES apparatus (inductively coupled plasma atomic emission spectroscopy) or an ICP-MS apparatus (inductively coupled plasma mass spectrometry).

To take a sample of said filtered solution 14 from said filtering membrane 7 and contained in said analysis compartment 6, the device 1 can preferably be provided with a sampling device 13, for example a syringe, automated if necessary.

The filtering membrane 7 preferably has pores smaller than 3 nm, more preferably smaller than 2 nm, even more preferably smaller than 1 nm.

Preferably, the filtering membrane 7 can comprise polyethylsulfone (PES), regenerated cellulose, polyvinyldenfluoride (PVDF), polyacrylonitrile (PAN) or cellulose acetate (CA).

The filtering membranes 7 used in the device 1 according to the invention are membranes for ultrafiltration, which allow a mechanical separation of molecules from a solution containing solutes of different dimensions, possibly in another phase (liquid or aeriform).

The material forming the filtering membrane 7 shall be such as to avoid the aggregation of nanoparticles, thus preventing occlusion of the pores thereof. There are various modifications of said materials that allow increase in the hydrophilicity of the surface and in the capacity to recover the solute.

Also the dissolution compartment 5 preferably consists of a material that prevents adhesion of the nanoparticles 2 and consequent precipitation and/or formation of metallic films on the walls. In the case illustrated, the dissolution compartment is formed of polycarbonate.

In use, the device 1 implements a method for determining the dissolution kinetics of colloidal nanoparticles 2 in respective derivation ions 3 in a solution.

In a first step a), a certain quantity of the colloidal nanoparticles 2 is dissolved in the solution 4 in a first environment, consisting of the dissolution compartment 5.

In a subsequent step b), the solution 4 is compressed by means of the piston 15 to induce passage to a second environment, consisting of the analysis compartment 6, which is distinct from the first environment consisting of the dissolution compartment 5. The pressure exerted by the piston 15 allows considerable reduction in the separation times of the derivation ion 3.

The derivation ion 3 is selectively separated in a step c) due to passage of the solution 4 through the filtering membrane 7 induced by the pressure generated by the piston 15.

In a step d), the quantity of the derivation ion 3 is then determined.

The steps b), c) and d) are repeated at successive time intervals (step e)), so as to construct a concentration curve of the derivation ions 3 according to the time.

Advantageously, the method furthermore comprises the step f) of stirring the solution 4, distinct from the compression step b).

The step f) has the purpose of mixing the solution 4 in the dissolution compartment 5 before the compression step b).

The method can preferably also comprise a step g) of heating the solution 4.

The methods can preferably also comprise a step h) of activating compressing means 8 to carry out step b), and a step i) of activating mixing means 10 to carry out step f); steps h) and i) are carried out independently of each other.

In use, the device 1 preferably implements a method for evaluating in vitro the toxicity of a colloidal nanoparticle 2 which comprises the method described above.

The intracellular toxicity can be indirectly correlated with the greater or lesser capacity of the NPs to dissolve in toxic ions inside appropriate cellular compartments such as lysosomes, for example.

The colloidal nanoparticles 2 of the present invention are preferably quantum dots, metal oxide nanoparticles or metal nanoparticles. Preferably, the metal nanoparticles are gold nanoparticles and silver nanoparticles.

### Examples

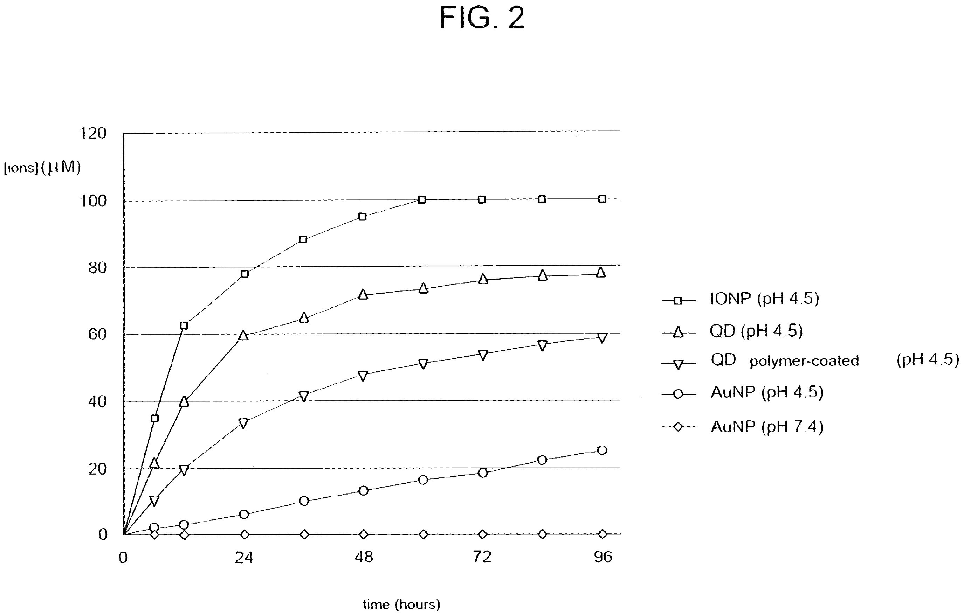

By way of example, figure 2 illustrates the results of an experiment performed by means of the device 1 and according to the method of the present invention, in which various release curves were constructed for the release of ions coming from various nanoparticles. The curves represent respectively the release kinetics of iron ions from nanoparticles of Fe₂O₃ with pH 4.5, the release kinetics of cadmium ions from quantum dots of CdSe with pH 4.5, the release kinetics of cadmium ions from quantum dots coated by polymer with pH 4.5, the release kinetics of gold ions from gold nanoparticles in an aqueous environment with acid pH (pH 4.5) and the release kinetics of gold ions from gold nanoparticles in an aqueous environment with neutral pH (pH 7.4).

As can be seen from the curves, the release kinetics change according to the core and its stability in an acid or neutral environment, the size of the nanoparticles (15 nm for the AuNP and 10 nm for the IONP) and the presence or absence of a coating more resistant to acid pH levels.

Furthermore, in vitro and in vivo toxicity studies have shown a clear correlation between the toxicity induced by the treatment with the above-mentioned nanomaterials and their relative stability curve, i.e. nanoparticles presenting faster release kinetics are also the most toxic.

From an examination of the characteristics of the method and the device 1 according to the present invention, the advantages it offers are evident.

In particular, due to the fact that the mixing means 10 are associated to the dissolution compartment 5 and distinct from the compressing means 8, it is possible to selectively choose where to mix in the region of solution 4 and where to compress in the region of solution 4.

Furthermore, due to the fact that the filtering membrane 7 has pores of size smaller than 10 nm, the device 1 allows determination of the dissolution kinetics of colloidal nanoparticles, a process that would be impossible with membranes provided with larger pores, such as those described in US2007/0160497, for example.

Again, due to the fact that the filtering membrane 7 is fixed, the colloidal nanoparticles are separated from the derivation ions via a process of exclusion of dimensions which allows passage of the ions but not of the nanoparticles.

Furthermore, the fact that the mixing means 10 and the compressing means 8 are actuatable independently of one another allows the pressure to be exerted on the solution 4 at successive time intervals, thus inducing separation of the derivation ion 3, without influencing mixing of the nanoparticles 2 in the solution 4 and therefore their level of dissolution. Determination of the quantity of derivation ions 3 which passes into the analysis compartment 6 at different time intervals is therefore more reliable and is a faithful representation of the dissolution of the nanoparticles 2 in the solution 4 which mimes the biological environment.

The presence of the compressing means 8 allows considerable reduction of the separation times of the derivation ion 3, resulting in a much quicker assay than the assays based on dialysis.

The possible provision of an injector 11 allows the nanoparticles 2 to be added with ease in a well-defined quantity.

The sampling device 13 for withdrawing a sample of the filtered solution 14 from the analysis compartment 6 allows the device 1 to be connected to a different determination device 9 for determining the quantity of the derivation ion 3, allowing adaptation of the device 1 to the analysis of different types of nanoparticles 2.

The method of determining the dissolution kinetics of colloidal nanoparticles 2 according to the invention allows a chemical/physical parameter (stability/dissolution in controlled environments) of colloidal nanoparticles 2 to be determined rapidly and with a high degree of accuracy.

The method is furthermore very flexible and can be adapted to determine the stability of a wide range of nanoparticles 2 in very different solutions 4 (aqueous, cellular media, biological liquids, etc.).

Again, the method allows diverse biological environments to be reproduced in an extremely realistic manner, varying the pH, the composition and the temperature of the solution 4 in which the nanoparticles 2 are dissolved.

The method for evaluating in vitro the toxicity of a colloidal nanoparticle 2 according to the present invention provides an accurate, reliable and rapid measurement of the intracellular toxicity of nanoparticles that release toxic ions (or ions which in large quantities become toxic in the cellular compartments) since it does not require the use of cell cultures. Cell cultures entail a considerable waste of time, work and materials, and are influenced by a considerable biological variability and often subject to contaminations which mean that the experiment has to be repeated on new cultures.

Lastly, both the device and the method according to the invention allow a high level of automation and analysis on a large scale (high throughput).

Lastly, it is clear that modifications and variations can be made to the method and the device 1 described and illustrated which do not depart from the protective scope defined by the claims.

In particular, the device 1 can be conceived in one single module or can be produced by the addition of "n" modules in parallel, thus allowing a multi-channel analysis of "n" types of nanoparticles (or the same nanoparticle in n environmental conditions) in relation to the number of modules present in the device. This allows significant reduction in costs and working times for performing the test, representing a very advantageous aspect given the diversity of nanoparticles present in laboratories and in the industrial sector.

## Claims

1. A device (1) for determining the dissolution kinetics of colloidal nanoparticles (2) into respective derivation ions (3) in a solution (4) comprising:
- a dissolution compartment (5) feedable with said solution (4) and with said colloidal nanoparticles (2);
- an analysis compartment (6) separate from said dissolution compartment (5);
- a fixed filtering membrane (7) which separates said dissolution compartment (5) from said analysis compartment (6), is selectively permeable to the derivation ion (3) and is adapted to filter said solution (4);
- compressing means (8) moving inside said dissolution compartment (5) and actuatable so as to induce the passage of said solution (4) from said dissolution compartment (5) to said analysis compartment (6) through said filtering membrane (7); and
- a determination device (9) for determining the amount of said derivation ion (3);
**characterised by** also comprising mixing means (10) associated to said dissolution compartment (5), adapted to mix said solution (4), and distinct from said compressing means (8), and in that said filtering membrane (7) has pores of size smaller than 10 nm.

2. The device according to Claim 1, wherein said mixing means (10) and said compressing means (8) are actuatable independently of one another.

3. The device according to Claim 1 or 2, also comprising an injector (11) adapted to feed said colloidal nanoparticles (2) to said dissolution compartment (5).

4. The device according to any of Claims 1 to 3, also comprising heating means (12) associated to said dissolution compartment (5).

5. The device according to any of Claims 1 to 4, wherein said determination device (9) for determining the amount of said derivation ion (3) is selected from the group consisting of a chromatography apparatus, an electrophoresis apparatus, an ICP-AES apparatus and an ICP-MS apparatus.

6. The device according to any of Claims 1 to 5, also comprising a sampling device (13) for sampling a sample of filtered solution (14) filtered by said filtering membrane (7) and contained in said analysis compartment (6).

7. The device according to any of Claims 1 to 6, wherein said filtering membrane (7) has pores of size smaller than 2 nm.

8. The device according to Claim 7, wherein said filtering membrane (7) has pores of size smaller than 1 nm.

9. The device according to any of the Claims 1 to 8, wherein said filtering membrane (7) comprises a material selected from the group consisting of polyethylsulfone (PES), regenerated cellulose, polyvinyldenfluoride (PVDF), polyacrylonitrile (PAN) and cellulose acetate (CA).

10. The device according to any of Claims 1 to 9, wherein said dissolution compartment (5) is formed by polycarbonate.

11. A method for determining the dissolution kinetics of colloidal nanoparticles (2) into respective derivation ions (3) in a solution (4) comprising the steps of:
a) dissolving a certain amount of said colloidal nanoparticles (2) in said solution (4) in a first environment;
b) compressing said solution (4) to induce the passage thereof to a second environment distinct from said first environment;
c) selectively separating the derivation ion (3);
d) determining the amount of said derivation ion (3);
e) repeating steps b), c) and d) at subsequent time intervals;
the method being **characterised by** also comprising the step f) of stirring said solution (4), distinct from step b) of compressing.

12. The method according to Claim 11, also comprising a step g) of heating said solution (4).

13. The method according to Claim 11 or 12, also comprising a step h) of actuating compressing means (8) to perform step b), and a step i) of actuating mixing means (10) to perform step f), steps h) and i) being performed independently of one another.

14. A method for evaluating the toxicity of a colloidal nanoparticle (2) in vitro comprising the method according to any of Claims 11 to 13.

15. The method according to any of Claims 11 to 14, wherein said colloidal nanoparticles (2) are selected from the group consisting of quantum dots, metal oxide nanoparticles and metal nanoparticles.

## Patentansprüche

1. Vorrichtung (1) zur Bestimmung der Auflösungskinetik von Kolloidnanoteilchen (2) in jeweilige abgeleitete Ionen (3) in einer Lösung (4), die aufweist:
- eine Auflösungskammer (5), die mit der Lösung (4) und mit den Kolloidnanoteilchen (2) speisbar ist;
- eine Analysekammer (6) getrennt von der Auflösungskammer (5);
- eine feste Filtermembran (7), welche die Auflösungskammer (5) von der Analysekammer (6) trennt, die für das abgeleitete Ion (3) selektiv durchlässig ist und geeignet ist, die Lösung (4) zu filtern;
- eine Kompressionseinrichtung (8), die sich im Inneren der Auflösungskammer (5) bewegt und betätigbar ist, um den Durchgang der Lösung (4) von der Auflösungskammer (5) durch die Filtermembran (7) zu der Analysekammer (6) zu induzieren; und
- eine Bestimmungsvorrichtung (9) zum Bestimmen der Menge des abgeleiteten Ions (3);
**dadurch gekennzeichnet, dass** sie auch eine Mischeinrichtung (10) aufweist, die mit der Auflösungskammer (5) assoziiert ist, die geeignet ist, die Lösung (4) zu mischen und die von der Kompressionseinrichtung (8) verschieden ist, und dass die Filtermembran (7) Poren mit einer Größe kleiner als 10 nm hat.

2. Vorrichtung nach Anspruch 1, wobei die Mischeinrichtung (10) und die Kompressionseinrichtung (8) unabhängig voneinander betätigbar sind.

3. Vorrichtung nach Anspruch 1 oder 2, die auch einen Injektor (11) aufweist, der geeignet ist, die Kolloidnanoteilchen (2) in die Auflösungskammer (5) einzuspeisen.

4. Vorrichtung nach einem der Ansprüche 1 bis 3, die auch eine Heizeinrichtung (12) aufweist, die mit der Auflösungskammer (5) assoziiert ist.

5. Vorrichtung nach einem der Ansprüche 1 bis 4, wobei die Bestimmungsvorrichtung (9) zur Bestimmung der Menge des abgeleiteten Ions (3) aus der Gruppe ausgewählt wird, die aus einer Chromatografievorrichtung, einer Elektrophoresevorrichtung, einer ICP-AES-Vorrichtung und einer ICP-MS-Vorrichtung besteht.

6. Vorrichtung nach einem der Ansprüche 1 bis 5, die auch eine Probenentnahmevorrichtung (13) zur Probenentnahme einer Probe der gefilterten Lösung (14), die von der Filtermembran (7) gefiltert wird und in der Analysekammer (6) enthalten ist, aufweist.

7. Vorrichtung nach einem der Ansprüche 1 bis 6, wobei die Filtermembran (7) Poren mit einer Größe kleiner als 2 nm hat.

8. Vorrichtung nach Anspruch 7, wobei die Filtermembran (7) Poren mit einer Größe kleiner als 1 nm hat.

9. Vorrichtung nach einem der Ansprüche 1 bis 8, wobei die Filtermembran (7) ein Material aufweist, das aus der Gruppe ausgewählt ist, die aus Polyethylsulfon (PES), regenerierter Zellulose, Polyvinyldenfluorid (PVDF), Polyakrylnitril (PAN) und Zelluloseazetat (CA) besteht.

10. Vorrichtung nach einem der Ansprüche 1 bis 9, wobei die Auflösungskammer (5) aus Polykarbonat ausgebildet ist.

11. Verfahren zur Bestimmung der Auflösungskinetik von Kolloidnanoteilchen (2) in jeweilige abgeleitete Ionen (3) in einer Lösung (4), das die folgenden Schritte aufweist:
a) Auflösen einer gewissen Menge der Kolloidnanoteilchen (2) in der Lösung (4) in einer ersten Umgebung;
b) Komprimieren der Lösung (4), um deren Durchgang zu einer zweiten Umgebung, die von der ersten Umgebung getrennt ist, zu induzieren;
c) selektives Trennen des abgeleiteten Ions (3);
d) Bestimmen der Menge des abgeleiteten Ions (3);
e) Wiederholen der Schritte b), c) und d) in nachfolgenden Zeitabständen;
wobei das Verfahren **dadurch gekennzeichnet ist, dass** es auch den Schritt f) des Rührens der Lösung (4) getrennt von dem Schritt b) des Komprimierens aufweist.

12. Verfahren nach Anspruch 11, das auch einen Schritt g) des Heizens der Lösung (4) aufweist.

13. Verfahren nach Anspruch 11 oder 12, das auch einen Schritt h) der Betätigung der Kompressionseinrichtung (8), um den Schritt b) durchzuführen, und einen Schritt i) der Betätigung der Mischeinrichtung (10), um den Schritt f) durchzuführen, aufweist, wobei die Schritte h) und i) unabhängig voneinander durchgeführt werden.

14. Verfahren zur Bewertung der Toxizität eines Kolloidnanoteilchens (2) in vitro, welches das Verfahren nach einem der Ansprüche 11 bis 13 aufweist.

15. Verfahren nach einem der Ansprüche 11 bis 14, wobei die Kolloidnanoteilchen (2) aus der Gruppe ausgewählt werden, die aus Quantenpunkten, Metalloxidnanoteilchen und Metallnanoteilchen besteht.

## Revendications

1. Dispositif (1) de détermination de la cinétique de dissolution de nanoparticules colloïdales (2) dans des ions de dérivation (3) respectifs dans une solution (4) comprenant :
- un compartiment de dissolution (5) pouvant être alimenté en ladite solution (4) et en lesdites nanoparticules colloïdales (2) ;
- un compartiment d'analyse (6) séparé dudit compartiment de dissolution (5) ;
- une membrane filtrante fixe (7) qui sépare ledit compartiment de dissolution (5) dudit compartiment d'analyse (6), est sélectivement perméable à l'ion de dérivation (3) et est adaptée pour filtrer ladite solution (4) ;
- des moyens de compression (8) se déplaçant à l'intérieur dudit compartiment de dissolution (5) et pouvant être actionnés de manière à induire le passage de ladite solution (4) dudit compartiment de dissolution (5) audit compartiment d'analyse (6) à travers ladite membrane filtrante (7) ; et
- un dispositif de détermination (9) destiné à déterminer la quantité dudit ion de dérivation (3) ;
**caractérisé en ce qu'**il comprend également des moyens de mélange (10) associés audit compartiment de dissolution (5), adaptés pour mélanger ladite solution (4), et distincts desdits moyens de compression (8), et **en ce que** ladite membrane filtrante (7) a des pores d'une taille plus petite que 10 nm.

2. Dispositif selon la revendication 1, dans lequel lesdits moyens de mélange (10) et lesdits moyens de compression (8) sont actionnables indépendamment les uns des autres.

3. Dispositif selon la revendication 1 ou 2, comprenant également un injecteur (11) adapté pour alimenter ledit compartiment de dissolution (5) en lesdites nanoparticules colloïdales (2).

4. Dispositif selon l'une quelconque des revendications 1 à 3, comprenant en outre des moyens de chauffage (12) associés audit compartiment de dissolution (5).

5. Dispositif selon l'une quelconque des revendications 1 à 4, dans lequel ledit dispositif de détermination (9) destiné à déterminer la quantité dudit ion de dérivation (3) est choisi dans le groupe consistant en un appareil de chromatographie, un appareil d'électrophorèse, un appareil ICP-AES et un appareil ICP-MS.

6. Appareil selon l'une quelconque des revendications 1 à 5, comprenant en outre un dispositif de prélèvement (13) destiné à prélever un échantillon de solution filtrée (14) filtré par ladite membrane filtrante (7) et contenu dans ledit compartiment d'analyse (6).

7. Dispositif selon l'une quelconque des revendications 1 à 6, dans lequel ladite membrane filtrante (7) a des pores d'une taille plus petite que 2 nm.

8. Dispositif selon la revendication 7, dans lequel ladite membrane filtrante (7) a des pores d'une taille plus petite que 1 nm.

9. Dispositif selon l'une quelconque des revendications 1 à 8, dans lequel ladite membrane filtrante (7) comprend un matériau choisi dans le groupe consistant en le poly(éthylsulfone) (PES), la cellulose régénérée, le poly(fluorure de vinylidène) (PVDF), le poly(acrylonitrile) (PAN) et l'acétate de cellulose (CA).

10. Dispositif selon l'une quelconque des revendications 1 à 9, dans lequel ledit compartiment de dissolution (5) est formé par du polycarbonate.

11. Procédé de détermination de la cinétique de dissolution de nanoparticules colloïdales (2) dans des ions de dérivation (3) respectifs dans une solution (4) comprenant les étapes de :
a) dissolution d'une certaine quantité desdites nanoparticules colloïdales (2) dans ladite solution (4) dans un premier environnement ;
b) compression de ladite solution (4) pour induire son passage dans un second environnement distinct dudit premier environnement ;
c) séparation sélective de l'ion de dérivation (3) ;
d) détermination de la quantité dudit ion de dérivation (3) ;
e) répétition des étapes b), c) et d) à des intervalles de temps ultérieurs ;
le procédé étant **caractérisé en ce qu'**il comprend en outre l'étape f) d'agitation de ladite solution (4), distincte de l'étape b) de compression.

12. Procédé selon la revendication 11, comprenant également une étape g) de chauffage de ladite solution (4).

13. Procédé selon la revendication 11 ou 12, comprenant également une étape h) d'actionnement de moyens de compression (8) pour réaliser l'étape b), et une étape i) d'actionnement de moyens de mélange (10) pour réaliser l'étape f), les étapes h) et i) étant réalisées indépendamment l'une de l'autre.

14. Procédé d'évaluation de la toxicité d'une nanoparticule colloïdale (2) *in vitro* comprenant le procédé selon l'une quelconque des revendications 11 à 13.

15. Procédé selon l'une quelconque des revendications 11 à 14, dans lequel lesdites nanoparticules colloïdales (2) sont choisies dans le groupe consistant en des boîtes quantiques, des nanoparticules d'oxyde de métal et des nanoparticules de métal.
